# EUROPEAN PATENT APPLICATION

(11) **EP 4 421 422 A1**
(43) Date of publication of application: **28.08.2024**
(21) Application number: 23158423.6
(22) Date of filing: 24.02.2023
(51) Int. Cl.: F25D 19/00, G06N 10/40, H01J 49/00

(54) **A CRYOSTAT SOCKET FOR HOLDING AN ION TRAP DEVICE MOUNTED ON A SUBSTRATE IN A CRYOSTAT**

(71) Applicant: Infineon Technologies Austria AG, 9500 Villach (AT)
(72) Inventor: ROESSLER, Clemens, 9500 Villach (AT); SCHÜPPERT, Klemens Karl Heinrich, 9500 Villach (AT); DIETL, Matthias German, 9500 Villach (AT); COLOMBE, Yves, 9500 Villach (AT); AUCHTER, Silke Katharina, 9500 Villach (AT)
(74) Representative: Lambsdorff & Lange Patentanwälte Partnerschaft mbB

(57) **Abstract**

A cryostat socket for holding an ion trap device mounted on a substrate in a cryostat comprises a frame having a heat removal surface configured to be thermally coupled to a laterally outer region of the device carrier. The cryostat socket further comprises a cover configured to exert a compressive force on the front side of the device carrier when assembled with the frame, by which the rear side of the device carrier is thermally coupled to the heat removal surface.

## Description

### Technical Field

This disclosure relates generally to the field of ion traps, and in particular to ion traps for quantum computing installed in a cryogenic environment.

### Background

Trapped ions are one of the most promising candidates for use as qubits (quantum bits) in quantum computers since they can be trapped with long lifetimes in a scalable array by virtue of electromagnetic fields.

Ion trap devices are operated in a cryogenic environment. To that end, an ion trap device is mechanically and thermally coupled to a cryostat head by means of a cryostat socket. The design of the cryostat socket significantly affects the performance of the ion trap device.

Future ion trap devices may need to increase the number of controllable ions. As a consequence, the ion trap devices may increase in size. Further, the number of trap electrodes and the power dissipation of ion trap devices may increase..

The cryostat socket may allow optical access from a plurality of sides with a suitable numerical aperture. Further, the exposure of ions (or qubits) to electrostatic potentials due to contamination or optically generated stray charges should be as low as possible.

Moreover, a cryostat socket may allow safe and fast ion trap device changes for short learning cycles in further development. Typically, ion trap device changes are complicated because the ion trap devices need to be installed and removed upright or overhead, usually in very confined spaces.

### Summary

According to an aspect of the disclosure, a cryostat socket for holding an ion trap device mounted on a front side of a device carrier in a cryostat comprises a frame having a heat removal surface configured to be thermally coupled to a laterally outer region of the device carrier. The cryostat socket further comprises a cover configured to exert a compressive force on the front side of the device carrier when assembled with the frame, by which the rear side of the device carrier is thermally coupled to the heat removal surface.

According to another aspect of the disclosure, an ion trap module comprises a device carrier having a laterally inner region and a laterally outer region. A micro-fabricated ion trap device is mounted in the laterally inner region on a front side of the device carrier. The device carrier is configured to spread heat produced by the ion trap device from the laterally inner region to the laterally outer region.

### Brief description of the drawings

Like reference numerals designate corresponding similar parts. The features of the various illustrated embodiments can be combined unless they exclude each other and/or can be selectively omitted if not described to be necessarily required. Embodiments are depicted in the drawings and are exemplarily detailed in the description which follows.
Figure 1 is a schematic cross-sectional view of an exemplary cryostat socket.
Figure 2 is a schematic cross-sectional view of an exemplary cryostat socket having a spring pin insert arranged within a frame of the cryostat socket.
Figure 3A is a perspective top view illustrating exemplary metal pressure contacts of a cryogenic head.
Figure 3B is the perspective top view of Figure 3A with an exemplary cryostat socket frame mounted to the cryogenic head.
Figure 3C is the perspective top view of Figure 3B with an exemplary spring pin insert placed in the cryostat socket frame.
Figure 3D is the perspective top view of Figure 3C with an exemplary ion trap module disposed over the spring pin insert within the cryostat socket frame.
Figure 3E is the perspective top view of Figure 3D with an exemplary cover assembled with the frame.
Figure 4 is a perspective bottom view of an exemplary cover of the cryostat socket with an ion trap module disposed in the cover.
Figure 5 is a cutaway perspective view along line A-A of Figure 3E.
Figure 6A is the perspective top view of Figure 3E with an exemplary metal mesh covering an opening of the cover.
Figure 6B is the cutaway perspective view of Figure 5 with the exemplary metal mesh of Figure 6A assembled with the cover.
Figure 7 is a schematic sectional view of an exemplary ion trap module having a device carrier which includes a substrate and a metal layer.
Figure 8 is a schematic sectional view of another exemplary ion trap module having a device carrier which includes a substrate and a metal layer.
Figure 9 is a diagram illustrating the surface temperature of the ion trap device as a function of the thickness of a metal layer of copper on the device carrier.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

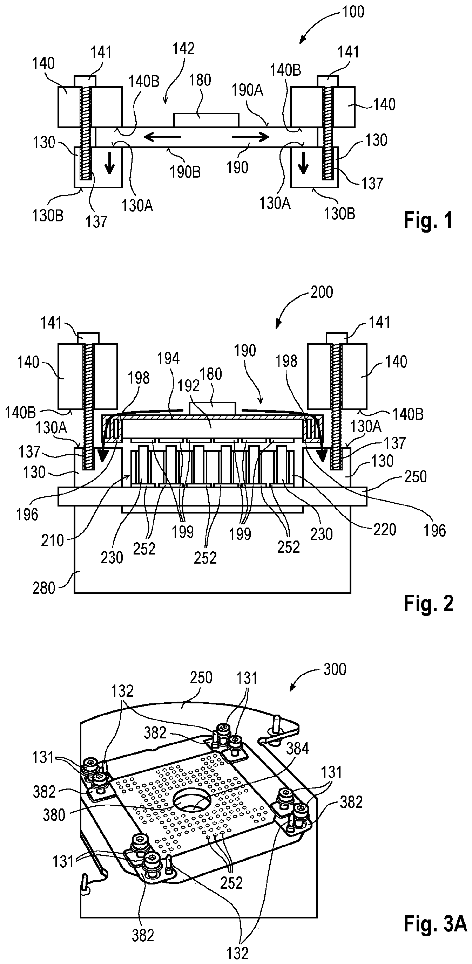

Figure 1 illustrates an exemplary cryostat socket 100 configured to hold an ion trap device 180 mounted on a front side 190A of a device carrier 190 in a cryostat (not shown). The ion trap device 180 may be a micro-fabricated ion trap device.

The device carrier 190 may include a laterally inner region and a laterally outer region. The ion trap device 180 may be mounted on the front side 190A of the device carrier 190 in the laterally inner region thereof. The device carrier 190 may be configured to spread heat produced by the ion trap device 180 from the laterally inner region to the laterally outer region of the device carrier 190.

The ion trap device 180 may be a micro-fabricated device, e.g. a chip. The lateral dimensions may, e.g., be 5 to 10 mm or more. The device carrier 190 may have lateral dimensions of, for example, a couple of cm.

The cryostat socket 100 comprises a frame 130 and a cover 140. The frame 130 and the cover 140 together may form part of a housing accommodating the ion trap device 190. As will be described in greater detail further below, the frame 130 and the cover 140 may define a measurement cell (or measurement chamber).

The frame 130 includes a heat removal surface 130A configured to be thermally coupled to the laterally outer region of the device carrier 190. The cover 140 can be assembled with the frame 130. The cover 140 is configured to exert a compressive force on the laterally outer region of the front side 190A of the device carrier 190 when assembled with the frame 130, by which the rear side 190B of the device carrier 190 is thermally coupled to the heat removal surface 130A.

For example, the cover 140 may be detachably secured to the frame 130 by screw connections 141. The frame 130 may be provided with threaded holes 137 configured to receive the screw connections 141. That way, the cover 140 may be detachably secured to the frame 130. When assembled with the frame 130 by, e.g., tightening the screw connections 141 (see Figure 1), the compressive force is exerted on the front side 190A of the device carrier 190 by abutment surfaces 140B of the cover 140. The abutment surfaces 140B may exert a high pressure on the laterally outer region of the device carrier 190 to create high thermal conductivity in the contact area between the device carrier 190 and the heat removal surface 130A. The pressure may exceed 200 N/mm² or 300 N/mm², for example.

As will be describe in more detail further below, the cover 140 may have a top side opening 142.

Arrows in Figure 1 illustrate the direction of heat flow from the ion trap device 180 through the device carrier 190 into the frame 130. The heat flow in the device carrier 190 is mainly in a lateral direction. The heat is then redirected mainly in the vertical direction when entering into and propagating in the frame 130.

In other words, the cover 140 may act as a compression lid when assembled with the frame 130. The efficiency of heat removal from the device carrier 190 into the frame 130 is dependent on the amount of pressure exerted by the cover 140 on the device carrier 190.

The frame 130 may be coupled to a cryogenic head (not shown in Figure 1) of the cryostat via one or a plurality of metal pressure contacts. The metal pressure contacts may be provided between pressure surfaces 130B of the frame 130 and counteracting pressure surfaces (not shown in Figure 1) of the cryogenic head.

Typically, the cryostat socket 100 is used during operation in a cryogenic and vacuum environment. The cryogenic operation temperature may be, e.g., about 4 to 10K. An ultra-high vacuum (UHV) of, e.g., less than 10⁻¹⁰ mbar may be applied.

Figure 2 illustrates a cryostat socket 200 which is similar to the cryostat socket 100, and reference is made to the above description to avoid reiteration. Figure 2 illustrates an example of the device carrier 190 in greater detail. The device carrier 190 may include a substrate 192 and a metal layer 194. The ion trap device 180 is thermally coupled to a radially inner region of the metal layer 194. The metal layer 194 is configured to dissipate heat produced by the ion trap device 180 to the laterally outer region of the device carrier 190.

The substrate 192 may include or be made of an insulating material, e.g. a core material of a printed circuit board (PCB) or, e.g., ceramics. For example, the substrate 192 may comprise or be of FR4 or RO4350 of Rogers Corporation or other low RF loss laminate. Further, the substrate 192 may comprise or be of sapphire or ceramics such as, e.g., AlN. The metal layer 194 may, e.g., be disposed over the substrate 192 at the front side 190A of the device carrier 190.

The device carrier 190 may include one or a plurality of metallic heat removal surfaces 196 arranged on the rear side 190B of the device carrier 190. The heat removal surfaces 196 of the device carrier 190 are configured to be thermally coupled to the one or plurality of heat removal surfaces 130A of the frame 130 by the pressure exerted by the cover 140. If the substrate 192 comprises or is of a material with high thermal conductivity such as, e.g., ceramic or sapphire, the heat removal surfaces 196 may, in particular, be omitted.

The one or more metallic heat removal surfaces 196 are thermally coupled to the metal layer 194. For example, coupling may be provided by one or a plurality of thermal vias 198 passing through the substrate 192 in the outer region of the device carrier 190. The thermal vias 198 may, e.g., have a high area density to provide for an effective thermal connection between the front side 190A and the rear side 190B of the device carrier 190.

As illustrated in Figure 2, the rear side 190B of the device carrier 190 may be provided with an array of contact pads 199. The contact pads 199 are connected to electrical terminals (not shown) of the ion trap device 180 via an electrical interconnect (not shown) provided in the device carrier 190. For example, the electrical interconnect may be implemented by an electrical redistribution structure embedded in the substrate 192.

As illustrated in Figure 2, a spring pin insert 210 may be arranged in the frame 130. The spring pin insert 210 may include a base plate 220 and contact pins 230 resiliently received in the base plate 220.

The contact pins 230 may be arranged in an array. When assembled, the array of contact pads 199 at the rear side 190B of the device carrier 190 contact the array of contact pins 230. The contact pins 230 are slightly depressed in their spring seats when the cover 140 is fixedly secured to the frame 130. This ensures a reliable electrical contact between the spring pin insert 210 and the device carrier 190 over a wide temperature range.

The spring pin insert 210 may comprise or be made of a material having a similar CTE (coefficient of thermal expansion) as the substrate 192. This reduces lateral displacement between these parts during temperature cycling. In particular, the spring pin insert 210 may include or be made of one of the materials cited above for the substrate 192. In particular, the spring pin insert 210 may include or be made of the same material as the substrate 192.

Figure 2 further illustrates an (optional) application board 250. The application board 250 may comprise an electrical wiring for electrically connecting the contact pins 230 of the spring pin insert 210 at their bottom region. To this end, conductive structures 252 on the application board 250 may be routed into the inside of the frame and may be connected to the contact pins 230 of the spring pin insert 210. The electrical wiring (e.g. conductive structures 252) of the application board 250 may connect the contact pins 230 of the spring pin insert 210 with electrical circuitry and/or electrical components (not shown) implemented laterally outside the frame 130 on the application board 250, for example.

The frame 130 is configured to be thermally attached to a cryogenic head 280 of the cryostat via one or a plurality of metal pressure contacts (not shown in Figure 2). In other examples, as e.g. illustrated in Figure 2, the frame 130 may be an integral part of the cryogenic head 280 of a cryostat. The coupling of the frame 130 to a cryogenic head of the cryostat should, in all examples, be as good as possible in terms of thermal connectivity in order to allow for highly efficient heat transfer. Typically, all solid state interfaces, if any, between the frame 130 and a cryogenic head 280 of the cryostat are implemented by metal pressure contacts. The cryogenic head 280 forms a cooled mounting platform of the cryostat.

In other words, the heat generated by the ion trap device 180 is effectively conducted to the outer region of the device carrier 190. From the outer region of the device carrier 190 the heat is effectively conducted to the frame 130. The heat is then effectively conducted from the frame 130 to the cryostat head 280 either by using a frame 130 which is integral with the cryostat head 280 or by using metal pressure contacts between the cryostat head 280 and the frame 130.

Figures 3A-3E illustrate various stages of assembly of a cryostat socket 300. The cryostat socket 300 exhibits various features and variations of the cryostat sockets 100, 200, and reference is made to the above description to avoid reiteration.

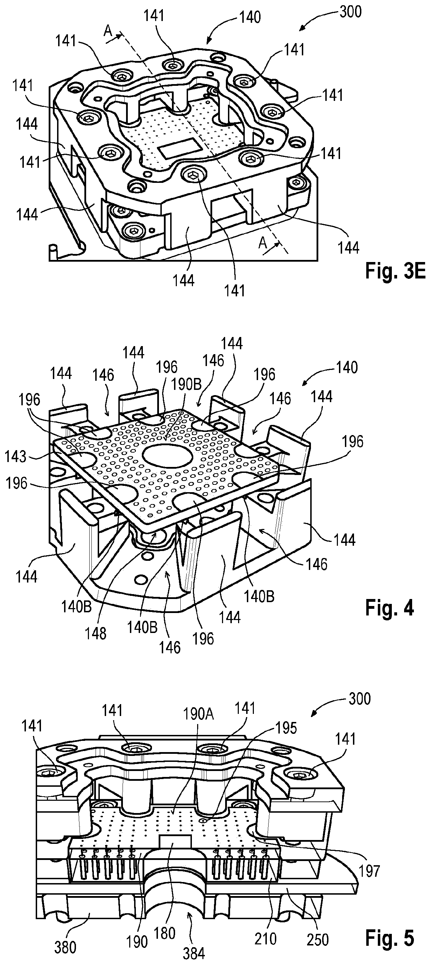

Figure 3A illustrates optional elements of the cryogenic socket 300, on which the frame 130 may be mounted. Reference sign 382 indicates pressure surfaces of a support plate 380 (see Figure 5) of the cryostat socket 300. The pressure surfaces 382 are configured to be pressed against the pressure surfaces 130B of the frame 130 by virtue of screw connections 131, for example. The pressure surfaces 382 may, e.g., be arranged opposite to corners of the frame 130. In the example shown in Figure 3A heat generated in the ion trap device 180 is removed from the frame 130 through the (e.g., four) pressure surfaces 382. The support plate 380 may be mounted on the cryostat head, or the pressure surfaces 382 may form surfaces of the cryogenic head itself (i.e., the support plate 380 may be omitted).

Figure 3A further illustrates conductive structures 252 of the application board 250 located in a region of the application board 250 over which the spring pin insert 210 is to be placed. The conductive structures 252 are, e.g., formed by pads or conductive traces on the application board 250.

The application board 250 as well as the support plate 380 may include an opening 384. The opening 384 provides for access (e.g. optical access, neutral atoms access, etc.) to the ion trap device 180.

The support plate 380 (see Figure 5) or any other base part to which the frame 130 is mounted may further be equipped with guide means 132. The guide means 132 are configured to adjust the location of the frame 130 relative to the application board 250 and thus, relative to the conductive structures 252 of the application board. For example, the guide means 132 may be formed by guide pins configured to interact with corresponding guide holes provided in the frame 130. The application board 250 may, e.g., fixedly attached to the support plate 380.

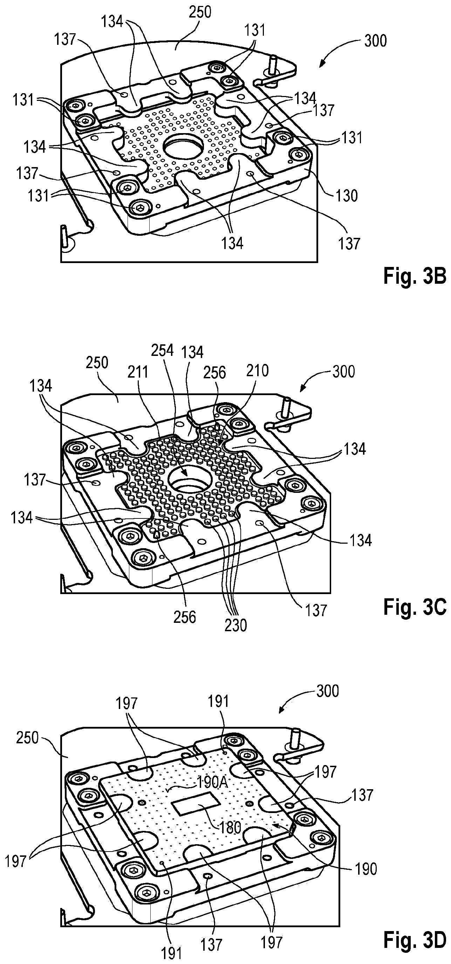

Referring to Figure 3B, the frame 130 is fixedly secured to the support plate 380 (or directly to the cryogenic head 280 of the cryostat) by pressing the metal pressure contacts (pressure surfaces 130B and 382) together. This may be done, for example, by screw connections 131 that engage threaded holes in the support plate 380 (or in the cryogenic head 280 itself).

The frame 130 may comprise a plurality of radially inwardly directed clamping projections with upwardly facing clamping surfaces 134. The clamping surfaces 134 may be located near clamping devices (e.g., threaded holes 137) included in the frame 130. The clamping surfaces 134 may form at least a part of the heat removal surface 130A of the frame 130 (see Figures 1, 2) .

In other words, the clamping surfaces 134 may be located near clamping devices (e.g., threaded holes 137) included in the frame 130 form at least a part of the heat removal surface 130A used to thermally couple to the rear side of the device carrier 190 by the compressive force when the device carrier 190 is assembled with the frame 130.

In the example shown in Figure 3B two clamping projections 134 are provided per 90° circumferential sector of the frame 130. In other examples one or more than two projections may be provided per 90° circumferential sector of the frame 130 or a continuous clamping region extending along the inner edge of the frame 130 may be provided for heat removal.

Figure 3C illustrates the cryostat socket 300 without cover 140. The carrier-mounted ion trap device 180 is not yet inserted in the frame 130. A spring pin insert 210 is arranged in the frame 130. The spring pin insert 210 provides an electrical connection between the conductive structures of the application board (or other electrical distribution/routing means) and electrical contacts on the rear side 190B of the device carrier 190. As already mentioned, the spring pin insert 210 may include contact pins 230 resiliently accommodated in a base plate 220 of spring pin insert 210. As apparent from Figure 3C, the contact pins 230 may be arranged in an array.

The lateral position of the spring pin insert 210 within the frame 130 is fixed by the frame 130. For instance, the spring pin insert 210 may be inserted into the frame 130 to be held in a laterally fixed position. To this end, the spring pin insert 210 may, e.g., have an outline 211 which matches, at least partially, to an outline of the inner edge of the frame 130. This outline 211 may include, for example, recesses that engage, for example, the clamping protrusions (with clamping surfaces 134) and/or other positioning structures (not shown) of the frame 130.

In other words, the lateral position of the frame 130 may precisely define the lateral position of the spring pin insert 210. Consequently, the lateral position of the spring pin insert 210 may be defined by the guide means 132 used to adjust the position of the frame 130 relative to the application board 250.

The spring pin insert 210 may include an opening 254. The opening 254 may be formed in a central portion of the spring pin insert 210. The opening 254 may be aligned with the opening 384 of the support plate 380.

The spring pin insert 210 may further be provided with guide means 256 configured to cooperate with the device carrier 190 for fine adjustment of the lateral position of the device carrier 190 relative to the spring pin insert 210. In the example shown in Figure 3C, the guide means 256 include guide pins located, e.g., at corners of the spring pin insert 210. The guide means 256 at the spring pin insert 210 ensure fine adjustment between the device carrier 190 and the spring pin insert 210. That is, the device carrier 190, when lowered onto the spring pin insert 210, is moved in an exactly vertical direction without slipping sideways.

The combination of guide means 132 (for coarse adjustment) and guide means 256 (for fine adjustment) provides highly precise control of the lateral position of the device carrier 190 (and thus the ion trap device 180) relative to the cryostat socket 300. Moreover, the guide means 132 reduce the lateral play of the chip carrier 190 relative to the contact pins 230 which improves the repeatability of the contact forming process. As a result, the structural width of the electrical interconnect (e.g., the conductive structures 252 and/or the pin array spacing of the spring pin insert 210) may be reduced. Moreover, laser alignment is significantly easier and less time consuming after each replacement of the device carrier 190.

In Figure 3D the device carrier 190 is placed in the frame 130. In this example, the guide means (pins) 256 engage with corresponding guide means 191 (e.g. holes) in the device carrier 190.

In its final position the rear side 190B of the device carrier 190 contacts the contact pins 230. The contact pins 230 are slightly depressed in their spring seats to ensure a reliable electrical contact over a wide temperature range.

The device carrier 190 may include one or a plurality of zones 197 of high thermal conductivity in vertical direction. The zones 197 may be arranged in a peripheral region of the device carrier 190. As illustrated in Figure 3D, the zones 197 may be distributed along the perimeter of the chip carrier 190. The zones 197 may, e.g., be formed by thermal vias 198 (see Figure 2) and, optionally, continuous metallizations at the front surface 190A and/or the rear surface 190B of the device carrier 190. In other examples, a zone 197 may include or be formed of a bulk metal inlay reaching through the substrate 192. These zones 197 may be aligned with the clamping surfaces 134 of the frame 130 to form a part of the heat removal path from the ion trap device 180 to the cryogenic head 280. The thermal conductivity of zone 197 may be greater than that of the device carrier material at cryogenic temperatures. For example, copper having a thermal conductivity greater than, e.g., 100 W/m/K may be used, optionally gold plated for lower thermal interface resistance. In other examples, the zones 197 may, e.g., comprise or be of gold, silver, AlN, or AlO.

As mentioned above, the device carrier 190 may further comprise a metal layer 194 through which the heat from ion trap device 180 is transferred to the outer region of the device carrier 190, e.g. to the zones 197 of high thermal conductivity. In Figure 3D this metal layer is not shown. It may either be embedded in the device carrier 190 or it may be provided at the front side 190A or the rear side 190B of the device carrier 190.

In Figure 3E the cover 140 has been fixed to the frame 130. A perspective bottom view of the cover 140 is shown in Figure 4.

The cover 140 may be provided with a receptacle 148 for the device carrier 190. The receptacle 148 serves as holding means for the device carrier 190 when the device carrier 190 with the ion trap device 180 is loaded into the cover 140 and transferred to the partially pre-assembled cryostat socket 300, as, e.g., shown in Figure 3C. The cover 140 is used to hold the ion trap module during assembly, e.g., overhead assembly, facilitating replacement of the ion trap modules.

Further, when the cover 140 is assembled with the frame 130, the receptacle 148 is configured to exert a compressive force on the front side 190A of the device carrier 190. More specifically, the compressive force may be exerted by abutment surfaces 140B pressing onto the zones 197 of high thermal conductivity on the device carrier 190. By this compressive force the rear side 190 (e.g., more specifically, the metallic heat removal surfaces 196 thereon) is pressed onto the heat removal surface(s) 130A of the frame 130. Concurrently, the rear side 190B of the device carrier 190 may also be pressed onto the contact pins 230 of the spring pin insert 210.

The cover 140 may be designed in various different ways. For example, the plurality of separate abutment surfaces 140B may be arranged at a distance from one another circumferentially on the cover 140. For example, the cover 140 may be provided with at least one or two abutment surfaces 140B per 90° circumferential sector of the cover 140. In the example shown in Figure 4, in total eight abutment surfaces 140B exist that form part of the receptacle 148 of the cover 140.

Besides its capacity to exert compressive force onto the device carrier 190, the cover 140 may also provide for a high degree of vertical and/or lateral optical access to the ion trap device 180.

For example, each abutment surface 140B may be formed by a side wall element 144 of the cover 140. The side wall elements 144 may be separated from each other by cutouts 146 of the side wall of the cover 140. In one example the cover 140 may have a cutout 146 at some or each side of the cover 140. Alternatively or in addition, the cover 140 may have cutouts 146 at some or each corner region of the cover 140. In Figure 4 cutouts 146 are provided both at the side faces and the corner regions of the cover 140. That way, the side wall of the cover 140 is subdivided by, e.g., eight cutouts 146. The cutouts 146 may allow optical access to the ion trap device 180 from some or all side faces and/or corner regions of the cryostat socket 300. For example, the numerical aperture NA may be equal to or greater than 0.1, 0.3, or 0.5.

The receptacle 148 may, e.g., further include inner side faces 143. The inner side faces 143 may coarsely control the lateral position of the device carrier 190 when placed in the receptacle 148 of the cover 140. In the example shown in Figure 4, inner side faces 143 are provided on each side wall element 144 and are formed as vertical steps extending from the horizontal abutment surfaces 140B.

The compressive force exerted by the cover 140 on the front side 190A of the device carrier 190 may be the only force applied to the front side 190A of the device carrier 190 to hold the device carrier 190 in place when assembled with the frame 130. Further, the clamping of the device carrier 190 between the cover 140 and the frame 130 may be the only substantial heat removal path between the ion trap device 180 and the cryogenic head 280. Optionally, one or more further heat removal paths such as, e.g., a central heat removal stamp (not shown) protruding through the opening 254 in the spring pin insert 210 and, e.g., through the opening 384 in the support plate 380 may be provided for additional heat removal.

Referring to Figures 3B-3E, the screw connections 141 may pass through through-holes in some or all of the wall elements 144. By tightening the screw connections 141, the cover 140 is pressed onto the device carrier 190. The cover 140 may thus be referred to as a compression lid for device carrier cooling.

The frame 130 and/or the cover 140 may comprise or be made of a material having a high thermal conductivity, e.g. copper, copper alloys, silver, sapphire, aluminum-nitrite or gold. The frame 130 and/or the cover 140 may be covered with a chemically inert layer of high thermal conductivity like for example platinum or gold to prevent oxidation and facilitate reliable thermal contacts along the heat-conducting path.

Figure 5 is a sectional side view representation of the cryostat socket 300. The device carrier 190 may be provided with a landing pad 195 on the front side 190A thereof.

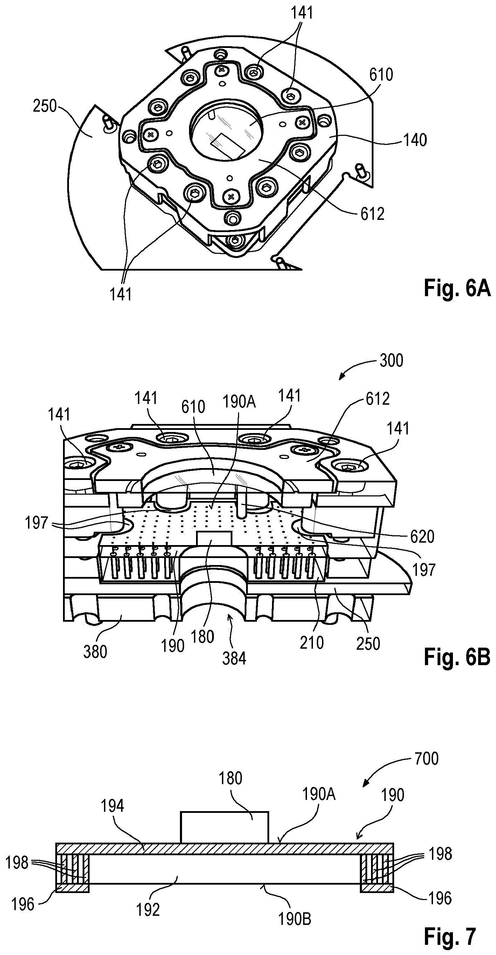

Referring to Figures 6A and 6B, the top side opening 142 of the cover 140 may be covered by a metal mesh 610. The metal mesh 610 may be a framed mesh, i.e. may be suspended at a mesh frame 612. The metal mesh 610 may be electrically insulated from the cover 140. To that end, the mesh frame 612 may, e.g., be of an electrically insulating material.

The cryostat socket 300 may further include means configured for biasing the metal mesh 610 to an electrical potential different from the electrical potential of the cover. For example, the cover 140 may include a contact pin 620 protruding in a direction towards the device carrier 190. More specifically, the contact pin 620 may contact the landing pad 195 of the device carrier 190 when the cover 140 is assembled with the frame 130. The contact pin 620 may, e.g., be mounted at the mesh frame 612 and is electrically connected to the metal mesh 610.

The metal mesh 612 may, e.g., be transparent. For example, the metal mesh 610 may be implemented by a transparent gold grid.

The metal mesh 610 may allow to shield stray charges on the cryostat socket 300 or on cryostat windows as far as possible. In some examples the metal mesh 610 may be grounded. In other examples a user-selectable (none-zero) electrical potential can be applied to the metal mesh 610.

According to one aspect of the disclosure, a cover 140 of any cryostat socket for holding an ion trap device 180 mounted on a device carrier 190 in a cryostat is described. The cover 140 includes an opening (e.g. top side opening 142 and/or side wall cutouts 146) covered by a metal mesh, the metal mesh being electrically insulated from the cover 140. The cover 140 comprises means for biasing the metal mesh 610 to an electrical potential different from the electrical potential of the cover 140. In general, such cover 140 with the metal mesh (e.g., metal mesh 610) may be used for any cryostat socket, i.e. also for cryostat sockets which use different heat dissipation concepts as described herein.

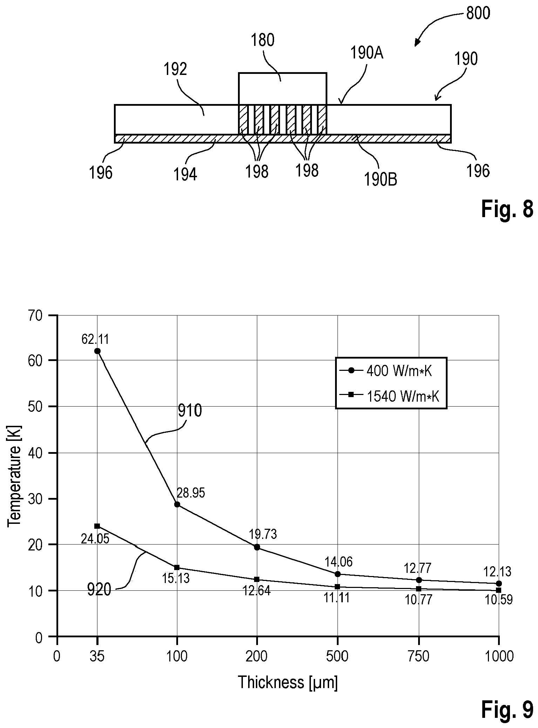

Figures 7 and 8 illustrate examples of ion trap modules 700, 800. The ion trap modules 700, 800 are suitable for being used in the cryostat sockets 100, 200, 300 described above, for example.

The ion trap module 700 includes the micro-fabricated ion trap device 180 mounted in a laterally inner region on the front side 190A of the device carrier 190.

Referring also to Figure 2, the device carrier 190 may comprise the metal layer 194 and the substrate 192. The ion trap device 180 is thermally coupled to a radially inner region of the metal layer 194. The metal layer 194 is configured to dissipate heat produced by the ion trap device 180 to the laterally outer region of the device carrier 190. As described before, the device carrier 190 is provided with means for transferring heat from the outer region of the metal layer 194 through the substrate 192 to metallic heat removal surfaces 196 at the rear side 190B of the device carrier 190.

In Figure 7 the metal layer 194 is provided at the front side 190A of the device carrier 190. In other examples (e.g. Figure 8) the metal layer 194 may be provided at the rear side 190B of the device carrier 190. In this case, the metallic heat removal surfaces 196 may, e.g., form an integral part of the metal layer 194. Further, in this and other cases, the heat transfer through the substrate 192 may be carried out in a central part of the device carrier 190 beneath the ion trap device 180 by, e.g. thermal vias 198.

In other examples, the metal layer 194 may, e.g., be implemented as an inner layer of the substrate 192. Further, multiple metal layers 194 may be used for heat dissipation, e.g. front side and/or back side and/or inner metal layers 194 in arbitrary combination. Moreover, the metal layer(s) 194 may be structured in a region beneath the ion trap device 180 to allow an electrical interconnect (not shown) formed in or on the substrate 192 to electrically connect to the ion trap device 180 (which may, e.g., a surface mount device or a device connected by bonding wires (not shown) to such electrical interconnect).

Thus, the (main) heat conduction path in the cryostat socket 100, 200, 300 may, e.g., include some or all of the elements 180 (ion trap device) -> 194 (metal layer) and/or 190 (device carrier) -> 197 (zone of high thermal conductivity of the device carrier) -> 196 (metallic heat removal surface on the device carrier) and/or 190B (rear side of the device carrier) -> 134 (clamping surface of frame) -> 130 (frame) -> 382 (pressure surface of base plate) -> 380 (base plate), with the respective intermediate pressure contacts as described above in connection with Figures 1 to 8. Further, an additional heat removal link (not shown in the Figures) may be provided such as by a heat bypass configured to thermally connect the cover 140 to the frame 130 or to any element in the aforementioned heat conduction path between the frame 130 and the base plate 380. Such an additional heat removal link may be implemented, for example, by a screwable metal braid (e.g. copper) that can be screwed to the cover 140 and at least one of the aforementioned elements. If such heat bypass is implemented, a substantial part of the heat may also be transported via the heat bypass to the frame 130 or any element in the heat conduction path downstream the frame 130. This may add heat removal capacity and/or allow to reduce the heat removal capacity via the rear side 190B of the device carrier 190 to the heat removal surface 130A of the frame 130.

Figure 9 illustrates simulation results of the surface temperature of the ion trap device 180 as a function of the thickness of a metal layer 194 that comprises copper. Curve 910 relates to a first copper specimen having a thermal conductivity of 400 W/m/K, while curve 920 relates to a second copper specimen having a thermal conductivity of 1,540 W/m/K. The thicker the copper layer 194, the better will be the thermal coupling of the ion trap device 180 to the cryostat, and therefore the ion trap device 180 temperature (e.g., chip temperature) will decrease.

Depending on the thermal conductivity of the copper, practicable surface temperatures of T < 20K may be achieved from a minimum thickness of, e.g., 200 um (for copper of a typical thermal conductivity, see curve 910) or 100 µm (for copper of a specifically high thermal conductivity, see curve 920). Hence, the metal layer 194 may have a minimum thickness of equal to or greater than 100 µm or 200 µm or 300 µm or 400 µm or 500 µm, for example. In some examples, the thickness of the metal layer 194 may, e.g., be in a range between 200 µm and 600 µm. If the device carrier 190 includes or is of a high thermally conductive material such as, e.g., ceramic or sapphire, the metal layer 194 may be much thinner or even omitted.

### EXAMPLES

The following examples pertain to further aspects of the disclosure:
Example 1 is a cryostat socket for holding an ion trap device mounted on a front side of a device carrier in a cryostat. The cryostat socket comprises a frame having a heat removal surface configured to be thermally coupled to a laterally outer region of the device carrier. The cryostat socket further comprises a cover configured to exert a compressive force on the front side of the device carrier when assembled with the frame, by which the rear side of the device carrier is thermally coupled to the heat removal surface.
In Example 2, the subject matter of Example 1 can optionally include wherein the frame is coupled to a cryogenic head of the cryostat via one or a plurality of metal pressure contacts.
In Example 3, the subject matter of Example 1 or 2 can optionally include wherein the frame comprises a plurality of radially inwardly directed clamping projections with upwardly facing clamping surfaces which form at least a part of the heat removal surface.
In Example 4, the subject matter of Example 3 can optionally include wherein at least one or two clamping projections are provided per 90° circumferential sector of the frame.
In Example 5, the subject matter of any of the preceding Examples can optionally include wherein the cover comprises a pressure surface which is located opposite the heat removal surface of the frame when the cover is assembled with the frame, wherein the compressive force is exerted on the front side of the device carrier via the pressure surface.
In Example 6, the subject matter of Example 5 can optionally include wherein the pressure surface comprises a plurality of clamping surfaces arranged at a distance from one another circumferentially on the cover.
In Example 7, the subject matter of any of the preceding Examples can optionally include wherein the cover has a quadrangular or octagonal peripheral shape, and wherein a peripheral wall of the cover has a cutout on each of the four or eight sides.
In Example 8, the subject matter of any of the preceding Examples can optionally further include a spring pin insert arranged in the frame, the spring pin insert comprising a base plate and contact pins resiliently received in the base plate.
In Example 9, the subject matter of Example 8 can optionally include wherein the spring pin insert comprises guide means configured to cooperate with the device carrier for fine adjustment of the lateral position of the device carrier relative to the spring pin insert.
In Example 10, the subject matter of any of the preceding Examples can optionally include wherein the cover comprises an opening covered by a metal mesh, the metal mesh being electrically insulated from the cover; and means for biasing the metal mesh to an electrical potential different from the electrical potential of the cover.
In Example 11, the subject matter of Example 10 can optionally include wherein the means for biasing the metal mesh comprises a contact pin protruding in a direction towards the device carrier.
Example 12 is an ion trap module, comprising: a device carrier having a laterally inner region and a laterally outer region; and a micro-fabricated ion trap device mounted in the laterally inner region on a front side of the device carrier, wherein the device carrier is configured to spread heat produced by the ion trap device from the laterally inner region to the laterally outer region.
In Example 13, the subject matter of Example 12 can optionally further include wherein the device carrier comprises a substrate and a metal layer, wherein the ion trap device is thermally coupled to a radially inner region of the metal layer and the metal layer is configured to dissipate heat produced by the ion trap device to the laterally outer region of the device carrier.
In Example 14, the subject matter of Example 13 can optionally further include wherein the metal layer has a thickness of equal to or greater than 100 µm.
In Example 15, the subject matter of Example 13 or 14 can optionally further include wherein the device carrier comprises a metallic heat removal surface arranged on the rear side of the device carrier, the metallic heat removal surface is thermally coupled to the metal layer.
In Example 16, the subject matter of any of Examples 12 to 15 can optionally further include wherein the device carrier comprises an array of electrical contact pads arranged on the rear side of the device carrier; and an electrical interconnect for connecting the electrical contact pads to the micro-fabricated ion trap device.
Example 17 is a system including a cryostat socket of any of Examples 1 to 11 and an ion trap module of any of Examples 12 to 16.
Example 18 is a cover of a cryostat socket for holding an ion trap device mounted on a device carrier in a cryostat, the cover comprising an opening covered by a metal mesh being electrically insulated from the cover, and means for biasing the metal mesh to an electrical potential different from the electrical potential of the cover.
In Example 19, the subject matter of Example 18 can optionally further include wherein the means for biasing the metal mesh to the electrical potential comprise a contact pin protruding in a direction towards the device carrier.
In Example 20, the subject matter of Example 18 or 19 can optionally further include wherein the means for biasing the metal mesh is configured to electrically contact a landing pad of the device carrier.
In Example 21, the subject matter of any of the Examples 18 to 20 can optionally further include a mesh frame for suspending the metal mesh, wherein the means for biasing the metal mesh is mounted to the mesh frame.
Example 22 is a cryostat socket for holding an ion trap device mounted on a front side of a device carrier in a cryostat. The cryostat socket comprises a frame and a base part to which the frame is mounted. The base part is provided with guide means configured to cooperate with the frame for adjustment of the lateral position of the frame relative to the base part.
In Example 23, the subject matter of Example 22 can optionally include wherein the base part is a support plate of the cryostat socket.
In Example 24, the subject matter of Example 22 or 23 can optionally include wherein the guide means provided at the base part comprise guide pins configured to interact with corresponding guide holes provided in the frame.
In Example 25, the subject matter of any of Examples 22 to 24 can optionally include wherein the guide means provided at the base part are configured for coarse positional adjustment and the guide means of the spring pin insert are configured for fine positional adjustment of the device carrier.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A cryostat socket for holding an ion trap device mounted on a front side of a device carrier in a cryostat, the cryostat socket comprising:
a frame having a heat removal surface configured to be thermally coupled to a laterally outer region of the device carrier; and
a cover configured to exert a compressive force on the front side of the device carrier when assembled with the frame, by which the rear side of the device carrier is thermally coupled to the heat removal surface.

2. The cryostat socket of claim 1, wherein the frame is coupled to a cryogenic head of the cryostat via one or a plurality of metal pressure contacts.

3. The cryostat socket of claim 1 or 2, wherein the frame comprises a plurality of radially inwardly directed clamping projections with upwardly facing clamping surfaces which form at least a part of the heat removal surface.

4. The cryostat socket of claim 3, wherein at least one or two clamping projections are provided per 90° circumferential sector of the frame.

5. The cryostat socket of any of the preceding claims, wherein the cover comprises a pressure surface which is located opposite the heat removal surface of the frame when the cover is assembled with the frame, wherein the compressive force is exerted on the front side of the device carrier via the pressure surface.

6. The cryostat socket of claim 5, wherein the pressure surface comprises a plurality of clamping surfaces arranged at a distance from one another circumferentially on the cover.

7. The cryostat socket of any of the preceding claims, wherein the cover has a quadrangular or octagonal peripheral shape, and wherein a peripheral wall of the cover has a cutout on each of the four or eight sides.

8. The cryostat socket of any of the preceding claims, further comprising:
a spring pin insert arranged in the frame, the spring pin insert comprising a base plate and contact pins resiliently received in the base plate.

9. The cryostat socket of claim 8, wherein the spring pin insert comprises guide means configured to cooperate with the device carrier for fine adjustment of the lateral position of the device carrier relative to the spring pin insert.

10. The cryostat socket of any of the preceding claims, wherein the cover comprises:
an opening covered by a metal mesh, the metal mesh being electrically insulated from the cover; and
means for biasing the metal mesh to an electrical potential different from the electrical potential of the cover.

11. The cryostat socket of claim 10, wherein the means for biasing the metal mesh comprises a contact pin protruding in a direction towards the device carrier.

12. An ion trap module, comprising:
a device carrier having a laterally inner region and a laterally outer region; and
a micro-fabricated ion trap device mounted in the laterally inner region on a front side of the device carrier, wherein
the device carrier is configured to spread heat produced by the ion trap device from the laterally inner region to the laterally outer region.

13. The ion trap module of claim 12, wherein the device carrier comprises a substrate and a metal layer, wherein the ion trap device is thermally coupled to a radially inner region of the metal layer and the metal layer is configured to dissipate heat produced by the ion trap device to the laterally outer region of the device carrier.

14. The ion trap module of claim 13, wherein the metal layer has a thickness of equal to or greater than 100 pm.

15. The ion trap module of claim 13 or 14, wherein the device carrier comprises a metallic heat removal surface arranged on the rear side of the device carrier, the metallic heat removal surface is thermally coupled to the metal layer.

16. The ion trap module of any of claims 12 to 15, wherein the device carrier comprises:
an array of electrical contact pads arranged on the rear side of the device carrier; and
an electrical interconnect for connecting the electrical contact pads to the micro-fabricated ion trap device.

17. A system comprising a cryostat socket of any of claims 1 to 11 and an ion trap module of any of claims 12 to 16.
